# EUROPEAN PATENT APPLICATION

(11) **EP 4 759 871 A1**
(43) Date of publication of application: **17.06.2026**
(21) Application number: 25223064.4
(22) Date of filing: 12.12.2025
(51) Int. Cl.: C08K 5/544, C08L 83/04

(54) **SILICONE SEALANT, USE THEREOF, AND SEALANT KIT**

(30) Priority: 12.12.2024 BE 202405882
(71) Applicant: DL Chemicals Detaellenaere-Loosvelt N.V., 8793 Waregem (BE)
(72) Inventor: FOURNEAU, Bart, 8793 Waregem (BE)
(74) Representative: Brantsandpatents bv

(57) **Abstract**

A silicone sealant composition, wherein the composition is obtained by mixing one or more polysiloxanes in a concentration of 25-90 wt%, one or more plasticizers in a concentration of 2-35 wt%, one or more crosslinkers in a concentration of 3-8 wt%, a mixture of adhesion promoters in a concentration of 0-3 wt% and a catalyst in a concentration of 0.01-0.3 wt%. Herein, the mixture of adhesion promoters comprises at least one primary amino-silane-based adhesion promoter, at least 3-aminopropyltriethoxysilane and at least propyltrimethoxysilane.

## Description

### TECHNICAL FIELD

The invention relates to the technical field of silicones, more particularly to the technical field of silicones for multifunctional use.

### PRIOR ART

Silicones or polysiloxanes are synthetic substances which consist of repeating units of silicon and oxygen atoms, with hydrogen atoms and/or carbon-containing side chains. Due to their hydrophobic properties, they are particularly suitable for creating watertight seals. Polysiloxanes additionally exhibit a low thermal conductivity, limited chemical reactivity and a high resistance to oxygen and UV radiation, as a result of which they are used in many applications as sealant.

Known from US2023357510 is a two-component silicone composition with a hydroxy-terminated polydiorganosiloxane with water in component (A) and a non-condensable polydiorganosiloxane, a uniform alkoxysilane crosslinker and a tin mercaptide catalyst in component (B), wherein the latter contains less than 5 wt% carbon black.

The current silicone sealant compositions are, however, specifically directed to certain applications and materials, such as PVC. Although these compositions often offer good adhesion and corrosion resistance, they lack the versatility to perform effectively on a wide range of substrates. This lack of multifunctional or universal silicone sealant compositions constitutes a bottleneck in the industry, because professional users often need different sealants for different materials and conditions.

In addition, many of the current silicone compositions exhibit disadvantages, such as shrinkage during the curing process, which reduces the sealing capacity, and a relatively high hardness after curing, as a result of which they are less resistant to expansion or shrinkage of the sealed surface. Furthermore, the use of these compositions often leads to considerable amounts of waste.

The present invention aims to provide a solution for at least some of these problems by developing a universal silicone sealant composition which is suitable for application on a wide range of substrates, without making concessions to the safety or quality of the seal.

### SUMMARY OF THE INVENTION

In a first aspect, the invention relates to a silicone sealant composition according to claim 1. Further preferred embodiments are stated in claims 2 to 13. The inventors of the present invention have found that the composition provides a high quality sealant composition which can be used on different substrates.

In a second aspect, the present invention relates to a sealant kit according to claim 44. More particularly, the present invention relates to a sealant kit comprising a silicone sealant composition according to any of claims 1-13 enclosed by an airtight package.

In a third aspect, the present invention relates to the use of a sealant kit according to claim 15.

Preferred embodiments are:
1. A multifunctional silicone sealant composition, wherein the composition is obtained by mixing:
   one or more polysiloxanes in a concentration of 25-90 wt%;
   one or more plasticizers in a concentration of 5-35 wt%;
   one or more crosslinkers in a concentration of 3-8 wt%;
   a mixture of adhesion promoters in a concentration of 0-3 wt%; and
   a catalyst in a concentration of 0.01-0.3 wt%;
   characterized in that the mixture of adhesion promoters comprises at least one primary aminosilane-based adhesion promoter, at least 3-aminopropyltriethoxysilane, and at least one propyltrimethoxysilane-based adhesion promoter, wherein propyltrimethoxysilane-based adhesion promoter comprises N-(beta-aminoethyl)-gamma-aminopropyltrimethoxysilane.
2. The silicone sealant composition according to preferred embodiment 1, characterized in that the mixture of adhesion promoters comprises between 10% and 50% a propyltrimethoxysilane-based adhesion promoter.
3. The silicone sealant composition according to any of the preceding preferred embodiments, characterized in that the mixture of adhesion promoters comprises between 20% and 60% 3-aminopropyltriethoxysilane.
4. The silicone sealant composition according to any of the preceding preferred embodiments, characterized in that the mixture of adhesion promoters comprises between 5% and 20% a primary amino-silane-based adhesion promoter, wherein the primary aminosilane comprises 3-(trimethoxysilyl)propylamine.
5. The silicone sealant composition according to any of the preceding preferred embodiments, characterized in that the mixture of adhesion promoters comprises N-(2-aminoethyl)-N'-(3-(trimethoxysilyl)propyl)ethylenediamine.
6. The silicone sealant composition according to any of the preceding preferred embodiments, characterized in that the mixture of adhesion promoters comprises a ratio 1:1:2:4.5, with respectively primary amino-silane-based adhesion promoter, N-(2-aminoethyl)-N'-(3-(trimethoxysilyl)propyl)ethylenediamine, propyltrimethoxysilane-based adhesion promoter, 3-aminopropyltriethoxysilane.
7. The silicone sealant composition according to any of the preceding preferred embodiments, characterized in that the primary aminosilane-based adhesion promoter is selected from the group of 3-aminopropyltrimethoxysilane (APTMS), N-(2-aminoethyl)-3-aminopropyltriethoxysilane, and 3-ureidopropyltriethoxysilane.
8. The silicone sealant composition according to any of the preceding preferred embodiments, characterized in that the one or more crosslinkers comprise an oxime group, wherein the crosslinkers have a molecular weight between 301.5 g/mol and 405.6 g/mol.
9. The silicone sealant composition according to any of the preceding preferred embodiments, characterized in that the crosslinkers are selected from the group of methyl ethyl ketoxime (MEKO), methyl isobutyl ketoxime (MIBKO), diethyl ketoxime, cyclohexanone oxime, acetonoxime, pentatonoxime, and a methyl ethyl ketoxime silicone crosslinker, preferably pentatonoxime.
10.The silicone sealant composition according to any of the preceding preferred embodiments, characterized in that the polysiloxanes have a viscosity between 20,000 cps and 350,000 cps.
11.The silicone sealant composition according to any of the preceding preferred embodiments, characterized in that the polysiloxanes are selected from the group of α,ω-dihydroxypolydimethylsiloxane, aminoethyl-aminopropyl functional polydimethylsiloxane.
12.The silicone sealant composition according to any of the preceding preferred embodiments, characterized in that the plasticizers comprise one or more organic plasticizers.
13. The silicone sealant composition according to any of the preceding preferred embodiments, characterized in that the organic plasticizers are selected from the group of α,ω-trimethylsilyl polydimethylsiloxane, calcium stearate, hydrocarbons and alkylbenzenes.
14. The silicone sealant composition according to any of the preceding preferred embodiments, characterized in that the catalyst is a catalyst based on dioctyltin oxide.
15. The silicone sealant composition according to any of the preceding preferred embodiments, characterized in that the composition optionally comprises one or more stabilizers, selected from the group of vinyl acetate, ethylene, titanium dioxide.
16. The silicone sealant composition according to any of the preceding preferred embodiments, characterized in that the composition comprises 0 wt% to 30 wt% chalk.
17. The silicone sealant composition according to any of the preceding preferred embodiments, characterized in that the composition comprises one or more fungicides, selected from the group of benzisothiazolinone, methylisothiazolinone, chloromethylisothiazolinone, octylisothiazolinone and zinc pyrithione.
18. The silicone sealant composition according to any of the preceding preferred embodiments, characterized in that the composition comprises fumed silica.
19. The silicone sealant composition according to any of the preceding preferred embodiments, characterized in that the composition comprises one or more color powders.
20. The silicone sealant composition according to any of the preceding preferred embodiments, characterized in that the composition exhibits a weight loss of at most 10% measured according to ISO standard 10563.
21. The silicone sealant composition according to any of the preceding preferred embodiments, characterized in that the composition exhibits a Shore A hardness of 5-40.
22. The silicone sealant composition according to any of the preceding preferred embodiments, characterized in that the composition exhibits a modulus of 0.1-1 N/mm² measured according to ISO 8339 at 100% deformation.
23. The silicone sealant composition according to any of the preceding preferred embodiments, characterized in that the composition exhibits skin formation within less than 35 minutes at 23°C and 50% relative humidity.
24. A sealant kit comprising a silicone sealant composition according to any of preferred embodiments 1-23, enclosed by an airtight package.
25. The sealant kit according to preferred embodiment 24, characterized in that the airtight package is a cylindrical, polyethylene, polypropylene or polyamide cartridge.
26. The sealant kit according to any of the preceding preferred embodiments 24-25, characterized in that the cylindrical cartridge comprises a nozzle and a plunger.
27. The sealant kit according to any of the preceding preferred embodiments 24-26, characterized in that the sealant kit comprises a hand-operated gun.
28. The sealant kit according to any of the preceding preferred embodiments 24-27, characterized in that the airtight package is a foil.
29. The sealant kit according to any of the preceding preferred embodiments 24-28, characterized in that the sealant kit comprises a foil-connectable nozzle.
30. The use of a multifunctional silicone sealant composition according to any of preferred embodiments 1-23 or a sealant kit according to any of preferred embodiments 24 to 29, wherein the silicone sealant composition is suitable for sealing spaces between one or more substrates, such as joints, wherein spaces have a width situated between 1 mm and 50 mm, and wherein the sealant composition is at least suitable for a use on a substrate selected from stone, including natural stone, glass, concrete, and ceramics.

### DETAILED DESCRIPTION

The invention relates to a silicone sealant composition comprising multiple adhesion promoters for a multifunctional use.

Unless defined otherwise, all terms used in the description of the invention, including technical and scientific terms, have the meaning as commonly understood by a person skilled in the technical field of the invention. For a better assessment of the description of the invention, the following terms are explicitly explained.

As used in this document, the articles "a", "an" and "the" refer to both the singular and the plural, unless the context clearly dictates otherwise. For example, "a segment" means one or more segments.

When "around" or "about" is used in this document with respect to a measurable quantity, a parameter, a duration or point in time, and the like, this is intended to mean variations within ±20%, preferably within ±10%, more preferably within ±5%, even more preferably within ±1%, and still more preferably within ±0.1%, of the cited value, insofar as such variations are applicable to the invention described herein. However, it must be understood that the value of a quantity used where the term "about" or "around" is used, is itself specifically disclosed.

The terms "comprise", "comprising", "consist of", "consisting of", "provided with", "have", "having", "include", "including", "contain", "containing" are synonyms and are inclusive or open terms that indicate the presence of what follows, and which do not exclude or prevent the presence of other components, characteristics, elements, members, steps, as known from or disclosed in the prior art.

The citation of numerical ranges by their end points includes all integers, fractions, and/or real numbers between the end points, including the end points themselves.

Silicone sealant compositions are versatile materials which are used in construction, automotive, and industrial applications because of their excellent flexibility, water resistance and adhesion to various surfaces. These sealants form an elastic, durable layer which effectively protects against moisture, molds and extreme temperatures, making them ideal for seams, joints and surfaces which require long-term protection. The basis of the composition is often a polysiloxane polymer, which offers flexibility and stretchability. Crosslinkers are added to cure the material and to form a firm network. Stabilizers, such as UV absorbers and antioxidants, protect the sealant against degradation by sunlight and oxygen, while fungicides prevent mold growth, which is especially useful in humid environments such as bathrooms and kitchens.

In a first aspect, the invention relates to a silicone sealant composition, wherein the composition is obtained by mixing one or more polysiloxanes in a concentration of 25-90 wt%, one or more plasticizers in a concentration of 5-35 wt%, one or more crosslinkers in a concentration of 3-8 wt%, a mixture of adhesion promoters in a concentration of 0-3 wt% and a catalyst in a concentration of 0.01-0.3 wt%.

In an embodiment, the mixture of adhesion promoters comprises at least one primary amino-silane-based adhesion promoter, at least 3-aminopropyltriethoxysilane and at least propyltrimethoxysilane.

The current prior art shows a lack of multifunctional silicone sealant compositions which are effective on a wide range of substrates. Traditional sealants are often tailored to specific materials or conditions, as a result of which they are only usable to a limited extent in many situations. This leads to the need for different sealing products for various applications, which can be inefficient and expensive.

The unique composition of the present invention provides a strong, flexible and durable sealing material which is suitable for various substrates. The mixture of adhesion promoters is a combination which promotes a strong adhesion on both porous and non-porous surfaces and on organic and inorganic substrates. The mixture achieves an improved initial adhesion without the need for extensive surface pre-treatments, which further reinforces the versatility of the silicone sealant composition.

The primary amino-silane-based adhesion promoter ensures a strong initial adhesion, even on difficult-to-bond surfaces such as certain plastics. 2-aminopropyltriethoxysilane offers specific interactions with both porous and non-porous materials, which results in an improved adhesion on for example glass, metals and polymers. The addition of propyltrimethoxysilane further contributes to the universal applicability of the sealant composition because it not only promotes adhesion, but also forms a stable network which is resistant to moisture and other environmental influences.

The adhesion promoters work together to create a balance between initial adhesion and durability, which is essential for a sealant kit which must perform consistently on different substrates. This mixture gives reliable results on various surfaces.

In an embodiment, the silicone sealant composition comprises a mixture of adhesion promoters. This mixture comprises between 10% and 50%, preferably between 20% and 50%, a propyltrimethoxysilane-based adhesion promoter. Propyltrimethoxysilane-based adhesion promoters are versatile chemical substances which are often used to create durable and strong bonds between different substrates. Due to the trimethoxy groups, these adhesion promoters can react well with moisture from the air, which leads to the formation of silanol groups which adhere to inorganic surfaces such as glass and metals. At the same time, the propyl groups contribute to hydrophobic properties, as a result of which the adhesion layer becomes water-repellent and very durable, even in damp environments.

Because they have a relatively low viscosity, they are easy to process and to mix into sealants. This makes it possible to achieve a uniform distribution of the adhesion promoter in the formulation, which is crucial for consistent adhesion performance. In addition, the propyltrimethoxysilane structure contributes to the formation of a strongly crosslinked network within the silicone sealant composition, which contributes to a long service life and chemical resistance against environmental factors such as UV light and weathering.

In an embodiment, the propyltrimethoxysilane-based adhesion promoter is selected from the group of, but not limited to, propyltrimethoxysilane, 3-aminopropyltrimethoxysilane, N-(beta-aminoethyl)-gamma-aminopropyltrimethoxysilane, 3-mercaptopropyltrimethoxysilane, 3-chloropropyltrimethoxysilane, 3-glycidoxypropyltrimethoxysilane, methacryloxypropyltrimethoxysilane, vinyltrimethoxysilane, 3-isocyanatopropyltrimethoxysilane, 3-butenyltrimethoxysilane, 2-(3,4-epoxycyclohexyl)ethyltrimethoxysilane, 3-propyltriethoxysilane, phenyltrimethoxysilane, 4-methylphenyltrimethoxysilane, 3-dimethylethoxysilane (DMES), 4-(chloromethyl)phenyltrimethoxysilane, 3-(trimethoxysilyl)propyl-2-methylpropene, 2-butyltrimethoxysilane, and cyclohexyltrimethoxysilane. The mixture of adhesion promoters can comprise one or more propyltrimethoxysilane-based adhesion promoters. In a preferred embodiment, the mixture comprises at least N(beta-aminoethyl) gamma-aminopropyltrimethoxysilane.

The inventors have established that the addition of N(β-aminoethyl)-γ-aminopropyltrimethoxysilane (AEAPTMS) yields unexpected and significant improvements in the adhesion of the silicone sealant composition on various, difficult-to-treat substrates such as metals, plastics and glass. AEAPTMS exhibits a synergistic effect with 3-aminopropyltriethoxysilane (APTES), wherein the combination ensures a stronger initial bond as well as an increased durability of the adhesion layer under conditions of moisture, temperature fluctuations and mechanical load. The presence of AEAPTMS moreover results in a longer service life of the seal because delamination, shrinkage and loss of adhesion are significantly reduced. These improved performance characteristics were not predictable on the basis of conventionally used adhesion promoters in the prior art and show that AEAPTMS provides a specific and unexpected contribution to the multifunctionality and universal applicability of the silicone sealant composition.

Furthermore, according to an embodiment, the mixture of adhesion promoters comprises 3-aminopropyltriethoxysilane (APTES). APTES is an adhesion promoter which contains an amino group and has a silane base which can react with various surfaces. It belongs to the family of silane compounds, which consist of a silicone skeleton which is connected to organic groups via oxygen atoms. In the case of APTES, the amino group is present at the 3-position of the propyl group, which connects to the silane group via an ethoxy group.

The most important property of APTES is the presence of the amino group, which can form strong bonds with a wide range of substrates, such as glass, metals, ceramics and some plastics. The amino group itself is very reactive, especially in the presence of water, and can form hydrogen bonds or covalent bonds with other materials.

The ethoxy groups are hydrolysable and can react with water to form silane groups. This makes it possible to allow the silane to adhere to the surface of a material and subsequently to form a crosslinking network upon drying or heating of the application. In an embodiment, the mixture of adhesion promoters comprises between 20% and 60%, more preferably between 30% and 60%, even more preferably between 40% and 60%, 3-aminopropyltriethoxysilane.

In an embodiment, the mixture of adhesion promoters comprises between 5% and 20%, more preferably between 10% and 20%, a primary amino-silane-based adhesion promoter. These are compounds which contain a primary amino group, coupled to a silane group via an organic bridge. The amino group reacts strongly with surfaces, especially those with a high polarity, such as glass, metals and plastics. At the same time, the silane group can adhere to the surface via hydrolysis, which increases the durability of the adhesion.

In an embodiment, the primary aminosilane-based adhesion promoter is selected from the group of, but not limited to, 3-aminopropyltriethoxysilane, 3-aminopropyltrimethoxysilane, 3-aminopropyltrichlorosilane, N-(2-aminoethyl)-3-aminopropyltrimethoxysilane, N-(3-aminopropyl)-3-aminopropyltrimethoxysilane, 3-(2-aminoethylamino)propyltrimethoxysilane, 3-ureidopropyltriethoxysilane, 3-(aminopropylamino)propyltriethoxysilane, N-(2-aminoethyl)-3-aminopropyltrichlorosilane, N-(2-aminoethyl)-N-(3-aminopropyl)-trimethoxysilane, N-(3-aminopropyl)-N-(2-aminoethyl)propyltrimethoxysilane, N-(3-aminopropyl)-N-(2-aminoethyl)-3-aminopropyltrimethoxysilane, N-(4-aminobutyl)-3-aminopropyltrimethoxysilane, 3-(aminoethyl)-3-aminopropyltriethoxysilane, 3-(3-aminopropyl)-propyltrimethoxysilane, 3-[(2-aminoethyl)-amino]propyltrimethoxysilane, 3-(2-aminoethyl)-4-aminobutyltrimethoxysilane, N-(2-aminoethyl)-N-(3-aminopropyl)-propyltrimethoxysilane, 3-(3-aminopropyl)-2-aminoethyltrimethoxysilane, and 3-(aminopropyl)-N-(3-aminoethyl)-propyltrimethoxysilane. In a preferred embodiment, the primary amino-silane-based adhesion promoter is selected from the group of, but not limited to 3-aminopropyltrimethoxysilane (APTMS), N-(2-aminoethyl)-3-aminopropyltriethoxysilane, 3-(trimethoxysilyl)propylamine and 3-ureidopropyltriethoxysilane.

In a further embodiment, the mixture of adhesion promoters comprises N-(2-aminoethyl)-N'-(3-(trimethoxysilyl)propyl)ethylenediamine.

In an embodiment, the mixture of adhesion promoters comprises a ratio 1:1:2:4.5, with respectively primary amino-silane-based adhesion promoter, N-(2-aminoethyl)-N'-(3-(trimethoxysilyl)propyl)ethylenediamine, propyltrimethoxysilane-based adhesion promoter, 3-aminopropyltriethoxysilane.

Polysiloxanes are polymers which are characterized by a unique Si-O-Si backbone (silicon-oxygen-silicon) with organic side chains, such as methyl or phenyl groups, which attach to the silicon atoms. This structure imparts to polysiloxanes their extraordinary properties, such as high flexibility, thermal stability, and resistance to water and chemicals. The combination of an inorganic silicon-oxygen chain with organic groups gives them the advantages of both inorganic and organic materials.

In sealants, polysiloxanes offer excellent elastic and sealing properties. Thanks to their flexibility, they continue to perform effectively under tension and elongation without tearing or losing their adhesion. This makes them ideal for applications in dynamic joints and connections where movement or vibration occurs, such as in building materials and automotive applications. Furthermore, polysiloxanes naturally repel water and let little moisture through, whereby they form an effective barrier in humid environments. Their thermal stability makes them resistant to high and low temperatures, which is essential for applications in extreme environments.

In sealant compositions, different types of polysiloxanes can be used, each with their own properties. Preferably, the polysiloxanes have a viscosity between 20000 cps and 350000 cps, preferably between 50000 cps and 300000 cps, more preferably between 100000 cps and 250000 cps, even more preferably between 150000 cps and 200000 cps.

In an embodiment, the silicone sealant composition comprises polysiloxanes selected from the group of α,ω-dihydroxypolydimethylsiloxane, aminoethylaminopropyl-functional polydimethylsiloxane, vinylpolydimethylsiloxane, phenylpolydimethylsiloxane. Preferably, the silicone sealant composition comprises α,ω-dihydroxypolydimethylsiloxane.

A silicone sealant composition according to the present invention comprises all components for curing, whereby it is simple and fast to use. Thanks to the very specific composition which has been developed by the inventors, a high quality sealant composition with an oxime crosslinker is obtained.

A silicone sealant composition according to the present invention has the advantage that little to no volume loss occurs during the curing process. In classic sealant compositions in the current prior art, cracks and/or damages arise in the silicone sealant composition and between the silicone sealant composition and the material to which the silicone sealant composition is applied during the curing of the silicone sealant composition. As a result, the silicone sealant composition loses uniformity and compactness, with as result an inefficient sealing of the sealing target. Furthermore, this composition is multifunctional and can be applied to a wide range of substrates.

In a silicone sealant composition, crosslinkers provide the curing process, wherein the material transitions from a liquid or paste-like form to a solid, elastic structure. Crosslinkers react with moisture from the air or other reactive components in the composition, which leads to crosslinking between the polysiloxane chains. This crosslinking process creates a stable and flexible network which is resistant to temperature fluctuations, moisture, and other environmental factors.

In an embodiment, the silicone sealant composition comprises crosslinkers with an oxime group. Preferably, the crosslinker exhibits a chemical similarity to the used polysiloxane. These crosslinkers have a molecular weight between 301.5 g/mol and 405.6 g/mol. The molecular weight is measured via a theoretical calculation according to the molecular structure of the crosslinker.

In an embodiment, the silicone sealant composition according to the present invention comprises one or more crosslinkers selected from the group of methyl ethyl ketoxime (MEKO), methyl isobutyl ketoxime (MIBKO), diethyl ketoxime, cyclohexanone oxime, acetonoxime, pentanone oxime, methyl ethyl ketoxime silicone crosslinker, preferably pentanone oxime.

In another embodiment, the silicone sealant composition comprises a crosslinker with an alkoxy group. This group comprises a reactive alkyl group which can interact with moisture in the air and thereby cures the polysiloxanes. Preferably, the crosslinker exhibits chemical similarities to the used polysiloxane. These crosslinkers have a molecular weight between 106 g/mol and 208 g/mol.

In an embodiment, the silicone sealant composition according to the present invention comprises one or more crosslinkers selected from the group of methyltrimethoxysilane, methyltriethoxysilane, vinyltrimethoxysilane, isobutyltrimethoxysilane and tetraethoxysilane, or any combinations of the foregoing.

To keep the silicone sealant composition manipulatable during the production process and for the use of the composition, plasticizers can be added to the composition. These promote the plasticity of the composition which provides for a kneadable, paste-like substance before the composition is cured. In an embodiment, the silicone sealant composition comprises one or more organic plasticizers. Organic plasticizers have better biodegradability, are less harmful to the environment and health and induce fewer chemical reactions than inorganic plasticizers. By adding one or more organic plasticizers to a silicone sealant composition, a smaller amount of inorganic plasticizers needs to be added.

In a preferred embodiment, a silicone sealant composition according to the present invention comprises one or more plasticizers selected from the group of, but not limited to, C4 to C8 alkyl terephthalate compounds including di-n-butyl terephthalate and di(2-ethylhexyl) terephthalate, glycerol triacetate (triacetin), 2,2,4-trimethyl-1,3-pentanediol diisobutyrate, phthalate esters (for example dioctyl phthalate, di-2-ethylhexyl phthalate, diisophthalate, diisononyl phthalate, di-linear nonyl phthalate, di-linear nonyl undecyl phthalate, di-linear undecyl phthalate, diundecyl phthalate, diisodecyl phthalate, C6-C10 straight-chain phthalates, C7 linear phthalate, C9 linear phthalate, C11 linear phthalate, ditridecyl phthalate, undecyl dodecyl phthalate, di(2-propylheptyl) phthalate, nonyl undecyl phthalate, texanol benzyl phthalate, polyester phthalate, diallyl phthalate, n-butyl phthalyl-n-butyl glycosate, dicapryl phthalate, butyl cyclohexyl phthalate, dicyclohexyl phthalate, butyl octyl phthalate, dioctyl adipate, di-2-ethylhexyl adipate, diisononyl adipate, diiso adipate, diisodecyl adipate, ditridecyl adipate, dibutoxyethyl adipate, dibutoxyethoxy adipate, di(n-octyl, undecyl) adipate, polyester adipate, polyglycol adipates, trioctyl trimellitate, tri-2-ethylhexyl trimellitate, triisooctyl trimellitate, triisononyl trimellitate, triisodecyl trimellitate, tri-n-hexyl trimellitate, dioctyl azelate, di-2-ethylhexyl glutarate, di-2-ethylhexyl sebacate, dibutyl sebacate, dibutoxyethyl sebacate, triethyl citrate, acetyl triethyl citrate, tri-n-butyl citrate, acetyl tri-n-butyl citrate, acetyl tri-n-hexyl citrate, n-butyl tri-n-hexyl citrate, isodecyl benzoate, diethylene glycol dibenzoate, dipropylene glycol dibenzoate, triethylene glycol dibenzoate, 1,4-cyclohexanedimethanol dibenzoate, 2,2,4-trimethyl-1,3-pentanediol dibenzoate, 2,2-dimethyl-1,3-propanediol dibenzoate, C10-C21 alkane phenol esters or alkyl sulfonic acid phenyl esters, acetic-acid reaction products with fully hydrogenated castor oil, pentaerythritol tetrabenzoate, glycerol tribenzoate, polypropylene glycol dibenzoate, triaryl phosphates, diisononyl cyclohexane-1,2-dicarboxylate, polymers of adipic acid / phthalates / adipates / sebacates with glycols and often acid-terminated, butyl benzyl phthalate, alkyl benzyl phthalate, C7-C9 butyl phthalate, diethylene glycol dibenzoate, dipropylene glycol dibenzoate, 2-ethylhexyl benzoate, C9 benzoates, C10 benzoates, texanol benzoate, ethylene glycol dibenzoate, propylene glycol dibenzoate, triethylene glycol dibenzoate, diheptyl phthalate, dihexyl phthalate, dimethyl phthalate, diethyl phthalate, dibutyl phthalate, diisobutyl phthalate, α,ω-trimethylsilyl polydimethylsiloxane, calcium stearate, hydrocarbons and alkylbenzenes, or any combinations of the foregoing. Most preferably, the silicone sealant composition comprises one or more plasticizers selected from silicone oil comprising non-reactive polymers and hydrogenated petroleum distillates with a carbon chain comprising 11 to 25 carbon atoms.

Silicone sealant compositions may comprise adhesion promoters. Adhesion promoters are additives which improve the adhesion between the sealant composition and various substrates, such as glass, metal, plastic or concrete. Without adhesion promoters, the silicone may struggle to remain firmly adhered to surfaces, especially under challenging conditions such as moisture, temperature fluctuation and mechanical load.

Adhesion promoters form a bridge between the silicone matrix and the substrate. They typically have reactive groups which can bond with both the substrate and the polysiloxane, whereby they enable better adhesion. By creating a stronger interface, they improve the mechanical binding and extend the service life of the seal under stressful conditions. In an embodiment, the silicone sealant composition comprises a mixture of adhesion promoters, preferably said mixture comprises at least one amino-silane-based adhesion promoter. Amino-silane-based adhesion promoters have a hydrophilic group which reacts with the substrate and an organic group which can form covalent or secondary bonds with the silicone chains.

The curing of the silicone sealant composition is a chemical process which can be accelerated by a catalyst. Catalysts accelerate the reaction which converts the liquid, paste-like silicone into a firm, elastic end product. Namely, they ensure that the crosslinkers react faster and more efficiently with the polysiloxanes. As a result, the crosslinking takes place faster, which leads to a stable and elastic network which is resistant to mechanical load, moisture and temperature fluctuations. Without catalysts, curing would be slower or incomplete, which would impair the performance of the sealant. In an embodiment, the catalyst is selected from the group of, but not limited to, dibutyltin dilaurate (DBTDL), stannic oxide (tin oxide), tetrabutyl titanate, dioctyltin oxide, tetramethyldivinyltin, platinum catalyst (e.g. Karstedt catalyst), divinylsilane, ethyltriacetoxysilane, methyltriacetoxysilane, alkyl titanates (e.g. tetrabutyl titanate), zirconium acetylacetonate, amine catalysts (e.g. trimethylamine), cobalt oxide, chromium oxide, cyclopentadienyl titanium compounds, borate- and aluminate-based catalysts. In a preferred embodiment, the silicone sealant composition comprises a catalyst based on dioctyltin oxide.

Furthermore, a sealant composition can optionally comprise one or more stabilizers. These additives improve the stability of the product, both during storage and during use. They help in maintaining the physical and chemical properties of the sealants and offer protection against degrading influences such as UV radiation, heat, moisture and oxidation. The function of stabilizers is versatile. They retard the degradation of polysiloxanes by environmental factors, which extends the service life of the end product. In addition, they improve the processing by ensuring that the composition remains homogeneous during production, whereby consistent performance and quality are guaranteed.

Stabilizers must be chemically inert, which means that they must be compatible with the other ingredients in the formulation and must not cause unwanted reactions. They are often effective at low concentrations, as a result of which only small amounts are needed to have a significant impact on the stability of the product. One of the functions of stabilizers is slowing down the curing process of a silicone sealant composition. Because a silicone sealant composition comprises one or more stabilizers in an embodiment, it is avoided that the silicone sealant composition hardens faster than desired. In addition, the sealant composition can be processed more easily, giving a user more time to apply the sealant composition to one or more sealing targets, or, if applicable, to make corrections to one or more silicone sealant compositions that have just been applied. In an embodiment, stabilizers are selected from the group of, but not limited to UV-absorbing benzotriazoles, hindered amine light stabilizers (HALS), butylhydroxytoluene (BHT), phenolic antioxidants, phosphites, organophosphites, zinc oxide, magnesium oxide, titanium dioxide, organotin compounds, zirconium carboxylate, calcium carbonate, phenolic-hindered antioxidants, triphenyl phosphite, distearyl pentaerythritol diphosphite, dialkyl phosphites, hindered phenol stabilizers, sulphur-containing antioxidants. The stabilizers are preferably selected from the group of vinyl acetate, ethylene, and titanium dioxide.

In an embodiment, the silicone sealant composition comprises chalk. Chalk is added to silicone sealants as a filler for several reasons, both to improve physical properties and to optimize production and related costs. Chemically speaking, chalk is a form of calcium carbonate (CaCO₃) and it plays a role in increasing the stability, consistency and durability of the sealant composition.

Chalk acts as a reinforcing agent since it contributes to the mechanical strength of the curing material. As a result, the seal is more resistant to tearing, scratches and wear. In addition, chalk has a filling function. It helps to increase the volume of the composition without changing the core components of the formulation, which can be favorable to reduce the costs. By adding a relatively cheap filler such as chalk, the formulation can become more economical without this being at the expense of the performance or quality of the sealant. Finally, chalk also contributes to the resistance against UV radiation, since CaCO₃ is UV-stable, it helps to ensure the color fastness and durability of the sealant. In an embodiment, the silicone sealant composition comprises 0 wt% to 30 wt% chalk.

In an embodiment, the silicone sealant composition comprises one or more fungicides. Provision of fungicides in a silicone sealant composition according to the present invention prevents that molds and/or associated microorganisms can colonise the silicone sealant composition. In this way, it is avoided that silicone sealant compositions and/or the sealing target are contaminated and possibly damaged by aforementioned microorganisms. In an embodiment, the fungicide is selected from the group of, but not limited to zinc pyrithione, diiodomethyl-p-tolyl sulphone (DIT), octylisothiazolinone (OIT), 2-n-octyl-4-isothiazolin-3-one, N-(trichloro-methylthio)phthalimide (Folpet), benzisothiazolinone (BIT), chloromethylisothiazolinone (CMIT), propiconazole, iodocarb, terbutryn. In a preferred embodiment, the fungicide is selected from OIT and/or CMIT.

In an embodiment, the silicone sealant composition comprises fumed silica. In a preferred embodiment, the silicone sealant composition comprises 3 wt% to 10 wt% fumed silica. Adding an amount of fumed silica increases the viscosity of the silicone sealant composition in such a way that it does not run out after application, but is yet sufficiently fluid to seal and/or cover rough and/or uneven sealing targets in an efficient manner. This simplifies the application of a silicone sealant composition substantially.

In an embodiment, the silicone sealant composition optionally comprises one or more color powders. This addition induces coloration of the composition and allows provision for aesthetic wishes and/or needs for the use of the silicone sealant composition. The color powder can be selected from the group of, but not limited to, transparent, red, fire red, wine red, blue, pigeon blue, swimming pool blue, gentian blue, yellow, green, moss green, fern green, orange, purple, pink, brown, black, jet black, white, off-white, clear aluminum, aluminum, gray, gray aluminum, stainless steel, pearl mouse gray, turquoise, beige, magenta, lime, cyan, indigo, olive green, gold, silver, lavender, coral, peach, khaki, emerald green, navy blue, burgundy, mint green, terracotta, sepia, anthracite, cream-colored, fuchsia, cerulean, aubergine, petrol, sanguine, sapphire, dark red, jasmine, and lemon. Furthermore, each mentioned color can also comprise a matte variant. In an embodiment, the composition is colorless and then contains no color powders.

In an embodiment, the silicone sealant composition exhibits a weight loss of at most 20%, more preferably at most 15%, even more preferably at most 10% measured according to ISO standard 10563 exhibits. This low weight loss offers various advantages. Firstly, a limited weight loss indicates an excellent stability of the composition during and after curing, which extends the service life of the sealant. It also helps in maintaining mechanical properties such as flexibility and adhesion, even under prolonged exposure to stressful environments. In addition, it reduces the risk of shrinkage, which prevents cracks and detachments and promotes the overall sealing quality. Finally, a composition with minimal weight loss is also more resistant to evaporation of volatile substances, with a safe and sustainable application without harmful emissions as a result.

Silicone sealant compositions can exhibit a hardness. The hardness is the resistance which a material offers against permanent deformation. A sealant with a low hardness is more flexible and more stretchable whereas a silicone sealant composition with a higher hardness is rather stiff and offers more resistance to abrasion and extrusion. In an embodiment, the silicone sealant composition exhibits a Shore A hardness between 5-40.

Thanks to this hardness, the composition exhibits flexibility to accommodate fluctuations in certain parameters of a sealing target, such as size, depth, surface area or volume. The flexibility as a result of the low hardness allows the composition according to said embodiment to expand and/or shrink to a limited extent if necessary. As a result, an optimal sealing of the sealing target is maintained in the case one or more parameters of the sealing target alternate as a function of time.

In a preferred embodiment of a silicone sealant composition according to the present invention, the silicone sealant composition exhibits a modulus of 0.1-1 N/m² measured according to ISO standard 8339.

The time to skin formation of a silicone sealant composition provides an indication of the speed of curing of the silicone sealant composition. In a preferred embodiment of a silicone sealant composition according to the present invention, the silicone sealant composition exhibits skin formation within less than 35 minutes at 23°C and 50% relative humidity. This has the advantage that the composition cures relatively fast, but that a user still has sufficient time to make any corrections to a, for example, wrongly applied silicone sealant composition.

In a second aspect, the invention relates to a method for producing a silicone sealant composition as described above. This method comprises mixing one or more plasticizers selected from the group of, but not limited to, C4 to C8 alkyl terephthalate compounds, including di-n-butyl terephthalate and di(2-ethylhexyl) terephthalate, glycerol triacetate (triacetin), 2,2,4-trimethyl-1,3-pentanediol diisobutyrate, phthalate esters (for example dioctyl phthalate, di-2-ethylhexyl phthalate, diisophthalate, diisononyl phthalate, di-linear nonyl phthalate, di-linear nonyl undecyl phthalate, di-linear undecyl phthalate, diundecyl phthalate, diisodecyl phthalate, C6-C10 straight-chain phthalates, C7 linear phthalate, C9 linear phthalate, C11 linear phthalate, ditridecyl phthalate, undecyl dodecyl phthalate, di(2-propylheptyl) phthalate, nonyl undecyl phthalate, texanol benzyl phthalate, polyester phthalate, diallyl phthalate, n-butyl phthalyl-n-butyl glycosate, dicapryl phthalate, butyl cyclohexyl phthalate, dicyclohexyl phthalate, butyl octyl phthalate, dioctyl adipate, di-2-ethylhexyl adipate, diisononyl adipate, diiso adipate, diisodecyl adipate, ditridecyl adipate, dibutoxyethyl adipate, dibutoxyethoxy adipate, di(n-octyl, undecyl) adipate, polyester adipate, polyglycol adipates, trioctyl trimellitate, tri-2-ethylhexyl trimellitate, triisooctyl trimellitate, triisononyl trimellitate, triisodecyl trimellitate, tri-n-hexyl trimellitate, dioctyl azelate, di-2-ethylhexyl glutarate, di-2-ethylhexyl sebacate, dibutyl sebacate, dibutoxyethyl sebacate, triethyl citrate, acetyl triethyl citrate, tri-n-butyl citrate, acetyl tri-n-butyl citrate, acetyl tri-n-hexyl citrate, n-butyl tri-n-hexyl citrate, isodecyl benzoate, diethylene glycol dibenzoate, dipropylene glycol dibenzoate, triethylene glycol dibenzoate, 1,4-cyclohexanedimethanol dibenzoate, 2,2,4-trimethyl-1,3-pentanediol dibenzoate, 2,2-dimethyl-1,3-propanediol dibenzoate, C10-C21 alkane phenol esters or alkyl sulfonic acid phenol esters, acetic-acid reaction products with fully hydrogenated castor oil, pentaerythritol tetrabenzoate, glycerol tribenzoate, polypropylene glycol dibenzoate, triaryl phosphates, diisononyl cyclohexane-1,2-dicarboxylate, polymers of adipic acid / phthalates / adipates / sebacates with glycols and often acid-terminated, butyl benzyl phthalate, alkyl benzyl phthalate, C7-C9 butyl phthalate, diethylene glycol dibenzoate, dipropylene glycol dibenzoate, 2-ethylhexyl benzoate, C9 benzoates, C10 benzoates, texanol benzoate, ethylene glycol dibenzoate, propylene glycol dibenzoate, triethylene glycol dibenzoate, diheptyl phthalate, dihexyl phthalate, dimethyl phthalate, diethyl phthalate, dibutyl phthalate, diisobutyl phthalate, or any combinations of the foregoing. Most preferably, the oxime-type silicone sealant composition comprises one or more plasticizers selected from silicone oil comprising non-reactive polymers and hydrogenated petroleum distillates with a carbon chain comprising 11 to 25 carbon atoms.

Furthermore, the method for producing a silicone sealant composition comprises adding one or more oxime crosslinkers, selected from the group of, but not limited to, ketoxime (MEKO), methyl isobutyl ketoxime (MIBKO), diethyl ketoxime, cyclohexanone oxime, acetone oxime, methyl ethyl ketoxime silicone crosslinker, or any combinations of the foregoing.

In an embodiment, the method comprises the adding of one or more stabilizers during the mixing of one or more polysiloxanes and one or more plasticizers. By adding one or more stabilizers at the start of the method, the hardening process of the silicone sealant composition is retarded. This has the advantage that the silicone sealant composition can be processed more easily and it is avoided that the silicone sealant composition already cures during the production process.

Furthermore, the method comprises the adding of one or more fungicides during the mixing of one or more polysiloxanes and one or more plasticizers. Addition of one or more fungicides at the start of the production process has the advantage that potentially present molds get no chance to colonize the silicone sealant composition during the production process. In this way it is avoided that produced quantities of silicone sealant compositions are contaminated and wasted during the production process.

In an embodiment, the method comprises the adding and mixing in of fumed silica after the adding of one or more crosslinkers. Fumed silica increases the viscosity of a silicone sealant composition, which ensures that the composition is simpler to process and to handle during the production process.

In a further embodiment, the method optionally comprises the adding and mixing in of one or more color powders after adding one or more crosslinkers. By adding one or more color powders, it is possible to produce a large, uncolored batch of silicone sealant composition which is subsequently divided into two or more sub-batches to which one or more color powders can be added. As a result, it is possible to produce several colored silicone sealant compositions via one production process. This in turn has the advantage that the production proceeds faster, more efficiently and cheaper. In another embodiment, no color powder is added and an uncolored sealant composition is retained.

In a third aspect, the present invention relates to the use of a silicone sealant composition as described above. Said sealant composition is suitable for sealing spaces between one or more substrates, such as joints, wherein spaces have a width situated between 1 mm and 50 mm. The sealant composition is suitable for a use on a substrate selected from wood, concrete, rubber, glass, metal, stone, including natural stone, ceramics, porcelain, PVC, nylon, thermosets, thermoplastics and/or elastomers. Thanks to the combination of adhesion promoters which comprises at least one primary amino-silane-based adhesion promoter, at least 3-aminopropyltriethoxysilane and at least propyltrimethoxysilane, the silicone sealant composition can chemically bond with a wide range of substrates.

The silicone sealant composition can be used for sealing connection and expansion joints in facades, interior walls or between frame and wall. Furthermore, it can be used as natural stone sealant for thresholds, worktops, window sills, tiles, curbstones of bluestone, marble, granite or other stone, including natural stone. The composition ensures a watertight seal, as a result of which the composition is suitable for sealing joints around swimming pools and damp areas, such as bathrooms, kitchens and cold rooms. The composition is suitable for indoor and outdoor use, ideal for expansion joints in walls, glazing and partition walls.

In a fourth aspect, the present invention relates to a sealant kit comprising a silicone sealant composition of the oxime type as described above, enclosed by an airtight package. An airtight package prevents that a silicone sealant composition according to the present invention cures before this is desired and extends the shelf life of the composition. Furthermore, the transport and the storage thereof are substantially simplified by the airtight package.

In an embodiment, the airtight package is a cylindrical, polyethylene, polypropylene or polyamide cartridge. The present invention exhibits little to no adhesion towards these polymers, as a result of which the silicone sealant composition is easy to remove from such a cartridge. The cartridge can be cylindrical, whereby it comprises no irregularities, whereby the amount of remaining silicone which remains behind is minimized.

In an embodiment, the cylindrical cartridge comprises a nozzle and a plunger. This allows a user to take a silicone sealant composition out of a cartridge by moving the plunger in the direction of the nozzle.

In an embodiment, the sealant kit comprises a hand-operated gun. A hand-operated gun substantially facilitates moving a slidable bottom element toward the nozzle of the cartridge. Thus, the hand-operated gun simplifies the dispensing of a silicone sealant composition from said cartridge.

A known problem in the prior art is the large amount of waste when using one or more silicone sealant compositions on a frequent basis. In an embodiment, the airtight package is a foil. Said foil can, after using up a sealant kit according to said embodiment, be stored compactly. In this way, the amount of waste is limited. An additional advantage of foil as airtight package is that a smaller storage space is needed for the storing of a said sealant kit. This allows for a larger quantity of sealing kits to be stored, or requires a smaller location to store the same number of sealing kits.

In a further embodiment, the sealant kit comprises a foil-connectable nozzle. This has the advantage that a silicone sealant composition can be applied simply and directly from the foil package onto the sealing target.

In the following, the invention is described by means of non-limiting examples illustrating the invention, and which are not intended or to be interpreted to limit the scope of the invention.

### EXAMPLES

### EXAMPLE 1

A silicone sealant composition was produced as follows:
Mix 25-90 wt% polysiloxanes with 10-30 wt% plasticizer and 0.1-0.9 wt% stabilizer. Subsequently add 3-5 wt% crosslinker, after which mix 4-9 wt% fumed silica. Afterwards, add and mix 1-1.5 wt% mixture of adhesion promoters. Finally adding 0.05-1 wt% catalyst. The mixture of adhesion promoters comprises 0.24 wt% propyltrimethoxysilane-based adhesion promoter, 0.2 wt% primary aminosilane, 0.38 wt% N(beta-aminoethyl)gamma-aminopropyltrimethoxysilane and 0.91 wt% 3-aminopropyltriethoxysilane.

The silicone sealant composition as shown below was tested on substrates of natural stone, glass and concrete. This was compared with a silicone sealant composition which comprises the same adhesion promoters in another ratio, namely 1:3:1. The silicone sealant composition as described in this example, had a better adhesion to the substrate in comparison with the other composition. In particular on PVC and concrete, the ratio of 1:3:1 had a lower quality adhesion.

Said silicone sealant comprises the following ingredients:

| **Ingredient** | **wt%** |
|---|---|
| Polysiloxanes | 25-90 |
| Plasticizer | 10-30 |
| Stabilizer | 0.1-0.9 |
| Alkoxy crosslinker | 3-5 |
| Fumed silica | 4-9 |
| Adhesion promoter | 1-1.5 |
| Catalyst | 0.05-0.1 |

This silicone sealing composition was tested on the following parameters.

| **Parameter** | **Result** |
|---|---|
| Volume loss (%) [ISO 10563] | 5 |
| Weight loss (%) [ISO 10563] | 2 |
| Shore A hardness [ISO 868] | 20 |
| Modulus at 100% (N/mm²) [ISO 8339] | 0.34 |
| Skin formation at 23°C and 50% RH (min) | 15 |
| Curing speed after 24 hours at 23°C and 50% RH (mm) | 2.5 |

### EXAMPLE 2

Comparison of the silicone sealant composition according to Example 1 with a composition from the prior art.
- Composition S1: a two-component silicone corresponding to a representative composition from US 2023035751 (for example composition 1, table 2), mixed in an A:B ratio as described in US '751 (typically 13:1 or 3:1 (w/w)), comprising in component A, a mixture of hydroxyl-terminated polydimethylsiloxanes, fillers based on hydrophobized chalk and fumed silica, and in component B a combination of organ silanes (V1/V2/V3) as crosslinkers and a tin complex catalyst according to formula (V). This composition is proposed in US '751 as adhesive/sealant, but comprises no separately defined mixture of adhesion promoters and makes no mention of N(β-aminoethyl)γ-aminopropyltrimethoxysilane (AEAPTMS).
- Composition S2: the silicone sealant composition according to example 1 of the present invention, comprising 25-90 wt% polysiloxane, 5-35 wt% plasticizer, 3-8 wt% crosslinker, 1-1.5 wt% mixture of adhesion promoters and 0.05-0.1 wt% catalyst. The mixture of adhesion promoters comprises among others a propyltrimethoxysilane-based adhesion promoter, a primary aminosilane and 3-aminopropyltriethoxysilane, wherein the mixture in particular comprises N(β-aminoethyl)y-aminopropyltrimethoxysilane (AEAPTMS) in the ratio described in example 1.

### Test method

The mechanical properties and curing parameters of S2 were determined after 7 days curing at 23 °C and 50% relative humidity, as described in example 1:
- Shore A hardness was determined according to ISO 868.
- Modulus at 100% elongation was determined according to ISO 8339.
- Volume loss and weight loss were determined according to ISO 10563.
- Skin formation time and curing speed were determined at 23 °C and 50% RH.

For S1, the values for pot life and tensile strength are taken from the test results reported in US '751 for representative compositions, which after curing exhibit tensile strengths in the order of 1.5-1.8 MPa at elongations of approximately 150-200%. Shore hardness, volume loss, weight loss, modulus and adhesion values on specific substrates (such as natural stone, concrete, PVC) are not quantitatively reported in D1.

For S2, the values for volume loss, weight loss, Shore A hardness, modulus, skin formation and curing speed are based on the measurements described in example 1. Adhesion results on natural stone, glass and concrete are based on practical tests wherein no visible delamination was observed. Tensile strength and elongation at break of S2 are expected in the same order of magnitude as in US '751, given the similar polysiloxane basis and filler contents.

### Results

**Table 1: Comparison between S1 (US '751) and S2 (present invention)**

| **Property (7d, 23 °C, 50% RH)** | **S2** | **S1** |
|---|---|---|
| Shore A hardness | approx. 20 | n.r. (expected > 25) |
| Tensile strength [MPa] | approx. 1.6-1.8 (expected) | approx. 1.5-1.8 (typical) |
| Elongation at break [%] | approx. 150-250 (expected) | approx. 150-200 (typical) |
| Modulus at 100% elongation [MPa] | approx. 0.34 | n.r. (expected higher) |
| Volume loss [%] (ISO 10563) | approx. 5 | n.r. |
| Weight loss [%] (ISO 10563) | approx. 2 | n.r. |
| Skin formation [min] | approx. 15 | n.r. |
| Adhesion to natural stone | high, no delamination | n.r. |
| Adhesion to concrete | high, no delamination | n.r. |
| Adhesion to PVC | high, no delamination | n.r. |
| Adhesion to glass and metal | high, no delamination | qualitatively indicated as sealant, no quantitative data |

| | | |
|---|---|---|
| n.r. = not reported in US '751. | | |

Although S2 is expected to exhibit tensile strengths which are comparable to the representative compositions of S1, S2 exhibits a clearly lower hardness and modulus, while the adhesion to various substrates (natural stone, concrete, PVC, glass, metal) is at least as good, and in practice better. This indicates an improved balance between cohesion (bulk properties) and adhesion (adhesion to difficult-to-bond substrates).

This improved balance is attributed to the specific mixture of adhesion promoters in S2, wherein N(β-aminoethyl)γ-aminopropyltrimethoxysilane (AEAPTMS) is present in combination with 3-aminopropyltriethoxysilane and a primary aminosilane. AEAPTMS provides an additional, non-trivial contribution to the adhesion, in particular to metals, plastics and glass, and acts synergistically with 3-aminopropyltriethoxysilane, whereby a stronger and more durable interfacial bond is created without the bulk hardness needing to be substantially increased.

US '751 focuses primarily on the choice of tin complex catalysts and crosslinkers to control pot life and mechanical properties, without teaching or encouraging a mixture of adhesion promoters with AEAPTMS. There is no indication in D1 that adding AEAPTMS, in the ratio with other amino-silanes described in the present invention, would lead to a silicone sealant composition which simultaneously exhibits a low hardness/low modulus, a limited volume loss and a strongly improved, durable adhesion to a broad spectrum of substrates.

This example illustrates that the claimed composition offers a non-obvious combination of properties, namely a multifunctional silicone sealant composition with low shrinkage, low modulus and high adhesion to both porous and non-porous substrates, which is not achieved in the prior art.

## Claims

1. A multifunctional silicone sealant composition, wherein the composition is obtained by mixing:
one or more polysiloxanes in a concentration of 25-90 wt%;
one or more plasticizers in a concentration of 5-35 wt%;
one or more crosslinkers in a concentration of 3-8 wt%;
a mixture of adhesion promoters in a concentration of 0-3 wt%; and
a catalyst in a concentration of 0.01-0.3 wt%;
**characterized in that** the mixture of adhesion promoters comprises at least a primary amino-silane-based adhesion promoter, at least 3-aminopropyltriethoxysilane and at least a propyltrimethoxysilane-based adhesion promoter and wherein propyltrimethoxysilane-based adhesion promoter comprises N(beta-aminoethyl) gamma-aminopropyltrimethoxysilane.

2. The silicone sealant composition according to claim 1, **characterized in that** the mixture of adhesion promoters comprises between 10% and 50% a propyltrimethoxysilane-based adhesion promoter.

3. The silicone sealant composition according to any of the preceding claims, **characterized in that** the mixture of adhesion promoters comprises between 20% and 60% 3-aminopropyltriethoxysilane.

4. The silicone sealant composition according to any of the preceding claims, **characterized in that** the mixture of adhesion promoters comprises between 5% and 20% a primary aminosilane-based adhesion promoter, wherein the primary aminosilane comprises 3-(trimethoxysilyl)propylamine.

5. The silicone sealant composition according to any of the preceding claims, **characterized in that** the mixture of adhesion promoters comprises N-(2-aminoethyl)-N'-(3-(trimethoxysilyl)propyl)ethylenediamine.

6. The silicone sealant composition according to any of the preceding claims, **characterized in that** the mixture of adhesion promoters comprises a ratio 1:1:2:4.5, with respectively primary amino-silane-based adhesion promoter, N-(2-aminoethyl)-N'-(3-(trimethoxysilyl)propyl)ethylenediamine, propyltrimethoxysilane-based adhesion promoter, 3-aminopropyltriethoxysilane.

7. The silicone sealant composition according to any of the preceding claims, **characterized in that** the primary aminosilane-based adhesion promoter is selected from the group of 3-aminopropyltrimethoxysilane (APTMS), N-(2-aminoethyl)-3-aminopropyltriethoxysilane and 3-ureidopropyltriethoxysilane.

8. The silicone sealant composition according to any of the preceding claims, **characterized in that** the one or more crosslinkers comprise an oxime group, wherein the crosslinkers have a molecular weight between 301.5 g/mol and 405.6 g/mol, wherein the crosslinkers are preferably selected from the group of methyl ethyl ketoxime (MEKO), methyl isobutyl ketoxime (MIBKO), diethyl ketoxime, cyclohexanone oxime, acetone oxime, pentanone oxime, methyl ethyl ketoxime silicone crosslinker, preferably pentanone oxime.

9. The silicone sealant composition according to any of the preceding claims, **characterized in that** the polysiloxanes have a viscosity between 20,000 cps and 350,000 cps, wherein the polysiloxanes are preferably selected from the group of α,ω-dihydroxypolydimethylsiloxane, aminoethylaminopropyl-functional polydimethylsiloxane.

10. The silicone sealant composition according to any of the preceding claims, **characterized in that** the plasticizers comprise one or more organic plasticizers, preferably selected from the group of α,ω-trimethylsilyl polydimethylsiloxane, calcium stearate, hydrocarbons and alkylbenzenes.

11. The silicone sealant composition according to any of the preceding claims, **characterized in that** the catalyst is a catalyst based on dioctyltin oxide.

12. The silicone sealant composition according to any of the preceding claims, **characterized in that** the composition comprises one or more fungicides, selected from the group of benzisothiazolinone, methylisothiazolinone, chloromethylisothiazolinone, octylisothiazolinone and zinc pyrithione.

13. The silicone sealant composition according to any one of the preceding claims, **characterized in that** the composition comprises fumed silica.

14. A sealant kit comprising a silicone sealant composition according to any of claims 1-13, enclosed by an airtight package.

15. The use of a multifunctional silicone sealant composition according to any of claims 1-13 or a sealant kit according to claim 14, wherein the silicone sealant composition is suitable for sealing spaces between one or more substrates, such as joints, wherein spaces have a width situated between 1 mm and 50 mm, and wherein the sealant composition is at least suitable for a use on a substrate selected from stone, including natural stone, glass, concrete, and ceramics.
